# EUROPÄISCHE PATENTSCHRIFT

(11) **EP 1 133 829 B1**
(45) Veröffentlichungstag und Bekanntmachung des Hinweises auf die Patenterteilung: **27.08.2003**
(21) Anmeldenummer: 99955819.0
(22) Anmeldetag: 30.09.1999
(51) Int. Cl.: H04B 1/10

(54) **VERFAHREN UND VORRICHTUNG ZUM ERKENNEN UND ENTFERNEN VON STÖRIMPULSEN IN EINEM NUTZSIGNAL**
METHOD AND DEVICE FOR RECOGNISING AND REMOVING PARASITIC PULSES IN AN UTILITY SIGNAL
PROCEDE ET DISPOSITIF POUR RECONNAITRE ET ELIMINER DES IMPULSIONS PARASITES DANS UN SIGNAL UTILE

(30) Priorität: 24.11.1998 DE 19854073
(43) Veröffentlichungstag der Anmeldung: 19.09.2001
(73) Patentinhaber: ROBERT BOSCH GMBH, 70442 Stuttgart (DE)
(72) Erfinder: JELONNEK, Bjoern, D-89079 Ulm (DE); NYENHUIS, Detlev, D-31079 Sibbesse (DE)
(86) Internationale Anmeldenummer: DE9903149
(87) Internationale Veröffentlichungsnummer: WO00031882

(56) Entgegenhaltungen:
- EP-A- 0 141 218
- EP-A- 0 651 521
- US-A- 5 459 750

## Beschreibung

### Technisches Gebiet

Die Erfindung betrifft ein Verfahren und eine Vorrichtung zum Erkennen und Entfernen von Störimpulsen in einem Nutzsignal, gemäß dem jeweiligen Oberbegriff des Anspruchs 1 bzw. 13. Die Erfindung betrifft ferner die Verwendüng einer solchen vorrichtung in einen Ründfünkempfänger.

### Stand der Technik

Beispielsweise bei einem mobilen Empfang von Rundfunksignalen in einem Kraftfahrzeug treten häufig impulsartige Störungen auf, die durch bestimmte Baugruppen des Kraftfahrzeuges, wie beispielsweise Zündanlage, Scheibenwischer etc., hervorgerufen werden. Konventionelle AM-Rundfunkempfänger verwenden ein analog vorliegendes, breitbandiges ZF-Signal um derartige Störimpulse zu detektieren. Überschreitet das ZF-Signal eine fest vorbestimmte Schwelle, so wird das ZF-Signal als gestört erkannt und der Empfänger unterbricht entweder eine Weiterleitung des ZF-Signals, eines NF-Signals oder beider Signale. Hierbei ergibt sich jedoch der Nachteil, dass bei starken Schwankungen der Signalstärke des Rundfunk- oder Nutzsignals dieses ggf. selbst eine Stärke erreicht, welche die vorbestimmte Schwelle überschreitet, so dass trotz ungestörtem Nutzsignal eine Austastung erfolgt. Umgekehrt ist es möglich, dass Störimpulse nicht ausgetastet werden, weil sie unterhalb der fest vorbestimmten Schwelle liegen.

US-A-5 459 750 offenbart eine Vorrichtung und ein Verfahren zur Erkennung und zur Unterdrückung von Rauschen in einem eingehenden Signal. Dazu werden nachfolgende Schritte durchgeführt.
(1) Mittels einer "Energy Averaging Unit 12" wird aus dem Eingangssignal (s) ein erstes Signal (∈ₜ) gebildet, das die mittlere Signalenergie des Eingangssignals repräsentiert.
(2) Mittels einer "Log Conversion and Normalizing Unit 14" wird aus dem ersten Signal (∈ₜ) ein zweites Signal (Pₜ) gebildet, das durch Normierung des ersten Signals auf einen Erwartungswert der maximalen Signalenergie und nachfolgende Logarithmierung gebildet ist.
(3) In einer "Prediction Unit 16" wird aus dem zweiten Signal (Pₜ) ein Prädiktionswert (P_{pred}) für den Wert des zweiten Signals gebildet.
(4) In einer "Logic Unit 18" wird die Differenz zwischen der mittleren normierten Signalleistung, entsprechend dem zweiten Signal (Pₜ) und deren Prädiktionswert (P_{pred}) gebildet.
(5) In Abhängigkeit der Differenz wird ein Steuersignal erzeugt, das einen ersten Wert annimmt, wenn die in Schritt (4) gebildete Differenz eine Schwelle überschreitet, und das einen zweiten Wert annimmt, wenn die Differenz die Schwelle nicht unterschreitet.
(6) Das in Schritt (5) gebildete Steuersignal steuert eine "Muting Unit 20" zum Unterbrechen des Eingangssignals in Reaktion auf das in Schritt (5) gebildete Steuersignal. Wie hierzu in Spalte 4, Zeilen 18 bis 30 näher ausgeführt, wird ein Überschreiten der Schwelle derart interpretiert, dass das Eingangssignal Sprachinformationen enthält, wohingegen bei Unterschreiten der Schwelle davon ausgegangen ist, dass das Eingangssignal (s) Rauschen enthält. Dementsprechend wird die "Muting Unit 20" zur Unterdrückung von detektiertem Rauschen angesteuert, also dann, wenn der aus dem Differenzsignal abgeleitete "Prediction Error Measurement (PEM)" die vorgegebene Schwelle unterschreitet.

EP-A-0 651 521 offenbart einen Diffenzierer 211 zur Differenziation des Eingangssignals (s), wobei auch hier das Eingangssignal (s) in einem nachfolgenden "Moving Average Filter 24" zeitlich gemittelt wird. Somit wird auch hier ein aus dem differenzierten Nutzsignal abgeleiteter zeitlicher Mittelwert in nachfolgenden Stufen betrachtet.

### Darstellung der Erfindung, Aufgabe, Lösung, Vorteile

Es ist Aufgabe der vorliegenden Erfindung, eine Verbesserung dahingehend zu erzielen, dass in dem Nutzsignal enthaltene Stärimpulse unabhängig von der Stärke des Nutzsignal und unabhängig von der Stärke der Störimpulse sicher und automatisch erkannt und weitgehend unhörbar unterdrückt werden

Diese Aufgabe wird durch ein Verfahren der o.g. Art mit den in Anspruch 1 gekennzeichneten Merkmalen, durch eine Vorrichtung der o.g. Art mit den in Anspruch 13 gekennzeichneten Merkmalen sowie durch verwerdüng einer solchen vorrichtüng in einem Ründfünkempfänger.

Dazu ist ein Verfahren der o.g. erfindungsgemäß durch folgende Schritte gekennzeichnet:
(a) Digitalisieren des Nutzsignals zu einem digitalen Nutzsignal,
(b) Differentiation des digitalen Nutzsignals zu einem differenzierten digitalen Nutzsignal,
(c) Berechnen eines Schwellwertes aus dem differenzierten digitalen Nutzsignal,
(d) Vergleichen, ob das differenzierte digitale Nutzsignal den berechneten Schwellwert überschreitet und
(e) Austasten des Sttirimpulses, wenn in Schritt (d) festgestellt wird, dass das differenzierte digitale Nutzsignal den berechneten Schwellwert überschreitet.

Dies hat den Vorteil, dass mittels einer digitalen Signalverarbeitung nach einer Analog/Digitalwandlung eines Nutzsignals in diesem enthaltene Störimpulse sicher erkannt, ausgefiltert und weitgehend unhörbar unterdrückt werden.

Vorzugsweise Weitergestaltungen des Verfahrens sind in den Ansprüchen 2 bis 12 beschrieben.

Ein Aliaising bei der Analog/Digitalwandlung ist dadurch vermieden, dass das Nutzsignal vor Schritt (a) bandbegrenzt wird.

Um das Ergebnis der Berechnung des Schwellwertes nicht durch Leistungsspitzen des Störimpulses zu verfälschen ist die Differentiation in Schritt (b) eine Hochpassfilterung, wodurch Störspitzen besser erkennbar werden.

Zweckmäßigerweise werden in Schritt (b) bei der Differentiation ein Inphase-Anteil sowie ein Quadratur-Anteil des Nutzsignals getrennt voneinander differenziert.

In einer bevorzugten Ausführungsform wird in Schritt (e) beim Austasten statt eines tatsächlichen ZF-Signalwertes ein letzter ungestörter ZF-Signaiwert beibehalten oder kein Signal weitergegeben, wobei ein weiteres Einschreiben von Abtastwerten in eine Delay-Line unterbunden wird.

Beispielsweise ist das Nutzsignal ein ZF-Signal eines Rundfunkempfängers und das Nutzsignal ein AM-moduliertes Signal.

Eine von der Stärke eines etwaigen Störsignals unabhängige Schwellwertberechnung erzielt man dadurch, dass in Schritt (c) ein Betrag eines Inphase-Anteils sowie eines Quadratur-Anteiles des Nutzsignals zusammen mit einem um eine Taktperiode verzögerten und invertierten Schwellwert addiert werden, aus dem Ergebnis das Vorzeichen bestimmt, dieses mit dem um eine Taktperiode verzögerten Schwellwert multipliziert und das Ergebnis mit dem um eine Taktperiode verzögerten Schwellwert addiert wird, wobei das letzte Ergebnis einen neuen aktuellen Schwellwert darstellt.

Zum Bestimmen einer Adaptionsgeschwindigkeit bei der Schwellwertberechnung wird der um eine Taktperiode verzögerte Schwellwert vor der Multiplikation mit dem bestimmten Vorzeichen mit einem vorbestimmten Parameter α multipliziert.

Zum Festlegen eines minimalen Schwellwertes wird bei der letzten Addition zur Schwellwertberechnung zusätzlich ein vorbestimmter Parameter β hinzu addiert.

Zur wirksamen Elimination aller Störimpulsanteile auch zeitlich breiter Störimpulse werden in Schritt (e) eine vorbestimmte Anzahl von dem erkannten Störimpuls nachfolgenden Abtastwerten ausgetastet.

Zur Reduktion einer Abtastrate wird nach Schritt (e) eine FIR-Filterung (Finite-lmpule-Response-Filterung) durchgeführt.

Einer Vorrichtung der o.g. Art ist erfindungsgemäße gekennzeichnet durch die Merkmale der Patentansprüche 13

Dies hat den Vorteil, dass mittels einer digitalen Signalverarbeitung nach einer Analog/Digitalwandlung eines Nutzsignals in diesem enthaltene Störimpulse sicher erkannt, ausgefiltert und weitgehend unhörbar unterdrückt werden.

Vorzugsweise Weitergestaltungen der Vorrichtung sind in den Ansprüchen 14 bis 18 beschrieben.

Eine von der Stärke eines etwaigen Störsignals unabhängige Elimination desselben erzielt man dadurch, dass die Einrichtung zur Detektion eines Störimpulses eine Einrichtung zur Schwellwertberechnung aufweist, welche in Signalverarbeitungsrichtung folgendes umfasst, wenigstens eine Betragsbildungsvorrichtung, welche einen Betrag von wenigstens einem Anteil des digitalen Nutzsignals bildet, einen ersten Addierer, welcher alle aus dem gebildeten Nutzsignal gebildeten Beträge sowie einen um eine Taktperiode verzögerten und invertierten Schwellwert zu einem ersten Zwischensignal addiert, eine Vorzeichenberechnungsvorrichtung, welche ein Vorzeichen des ersten Zwischensignals bestimmt, einen ersten Multiplizierer, welcher das Vorzeichen mit dem um eine Taktperiode verzögerten Schwellwert zu einem zweiten Zwischensignal multipliziert, und einen zweiten Addierer, welcher das zweite Zwischensignal mit dem um eine Taktperiode verzögerten Schwellwert zu einem neuen aktuellen Schwellwert addiert, wobei ein Verzögerungsglied den neuen aktuellen Schwellwert abgreift und um eine Taktperiode verzögert dem ersten Addierer invertiert, dem zweiten Addierer und dem ersten Multiplizierer zuführt.

Zum Bestimmen einer Adaptionsgeschwindigkeit bei der Schwellwertberechnung ist zwischen dem Verzögerungsglied und dem ersten Multiplizierer ein zweiter Multiplizierer vorgesehen, welcher den um eine Taktperiode verzögerten Schwellwert mit einem vorbestimmten Parameter α multipliziert.

Zum Festlegen eines minimalen Schwellwertes weist der zweite Addierer einen zusätzlichen Eingang zum zusätzlichen hinzu addieren eines vorbestimmten Parameters β auf.

in einer bevorzugten Ausführungsform umfasst die Einrichtung zur Abtastratenreduktion und Austastung ein FIR-Filter (Finite-Impulse-Response-Filter) mit einer vorbestimmten Anzahl von Zustandsspeichern.

Ferner umfasst die Einrichtung zur Abtastratenreduktion und Austastung zweckmäßigerweise einen Zähler, dessen Ausgang die Zustandsspeicher des FIR-Filters derart ansteuert, dass bei erkanntem Störimpuls zum Austasten desselben für eine vorbestimmte Anzahl δ von Abtastwerten die Zustandsspeicher ihre letzten Werte vor Auftreten des Störimpulses beibehalten oder ihren Speicher auf Null setzen.

Eine Vorrichtung der vorbeschriebenen Art ist erfindungsgemäß in einem Rind funtempfänger der e.g. Art von der ZF-Stufe einsetzbar.

### Kurze Beschreibung der Zeichnungen

Nachstehend wird die Erfindung anhand der beigefügten Zeichnungen näher erläutert. Diese zeigen in
- Fig. 1: ein schematisches Blockschaltbild einer bevorzugten Ausführungsform einer erfindungsgemäßen Vorrichtung,
- Fig. 2: ein schematisches Blockschaltbild der Detektion eines Störimpulses der Ausführungsform gemäß Fig. 1,
- Fig. 3: ein schematisches Schaltbild eines bevorzugten Ausführungsbeispieles für einen digitalen Hochpassfilter,
- Fig. 4: ein schematisches Schaltbild eines bevorzugten Ausführungsbeispieles für eine erfindungsgemäße, digitale Schwellwertberechnung.
- Fig. 5: ein schematisches Schaltbild eines Ausführungsbeispieles für eine digitale Störimpulsdetektionsschaltung, das hier nicht be ansprücht ist,
- Fig. 6: ein schematisches Schaltbild eines bevorzugten Ausführungsbeispieles für eine digitale Schaltung zur Abtastratenreduktion und Störimpulsaustastung,
- Fig. 7: ein schematisches Schaltbild eines bevorzugten Ausführungsbeispieles für einen digitalen Zähler und
- Fig. 8: ein schematisches Schaltbild eines bevorzugten Ausführungsbeispieles für ein digitales Dezimationsfilter.

### Bester Weg zur Ausführung der Erfindung

Nachfolgend wird die Erfindung anhand einer bevorzugten Ausführungsform, am Beispiel eines Rundfunkempfängers für AM-modulierte Signale beispielhaft erläutert, wobei es jedoch klar ist, dass die Erfindung nicht auf dieses spezielle Anwendung beschränkt ist.

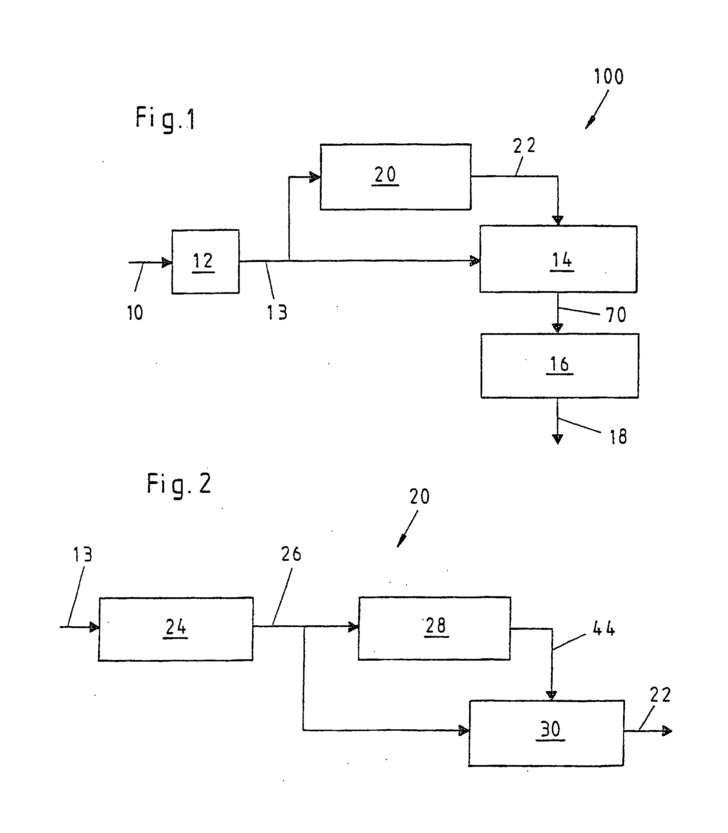

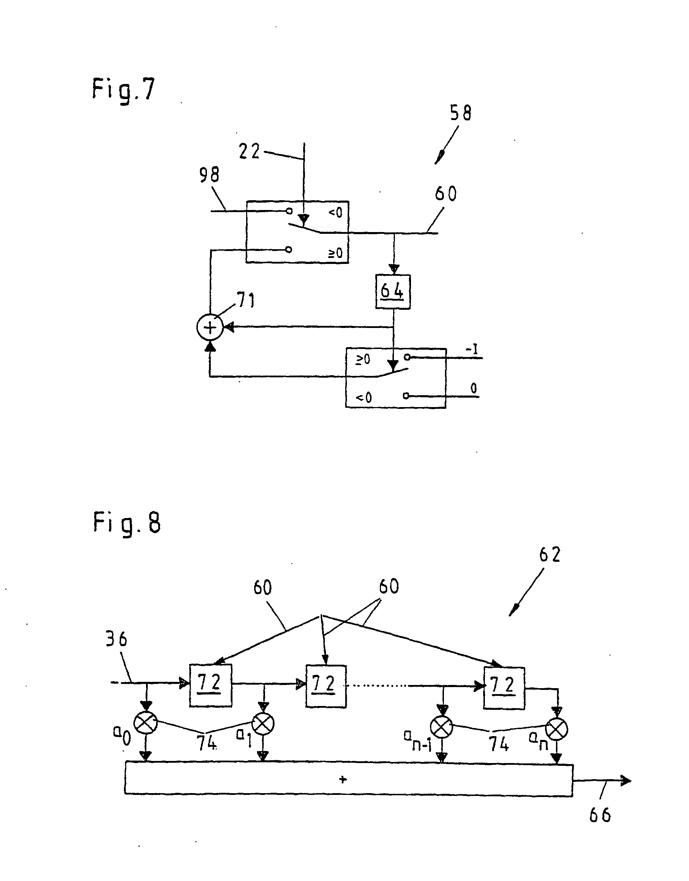

Figur 1 zeigt ein schematisches Blockschaltbild einer erfindungsgemäßen Vorrichtung 100, welche nach entsprechenden Eingangskreisen des Rundfunkempfängers von einer nicht dargestellten ZF-Stufe ein analoges ZF-Signal 10 erhält und in einem Analog/Digital-Wandler 12 zu einem digitalen ZF-Signal 13 wandelt. In Funktionsblock 14 erfolgt eine Abtastratenreduktion, beispielsweise mit einem nachfolgend unter Bezugnahme auf Fig. 8 noch näher erläuterten FIR-Filter (Finite-lmpulse-Response-Filter), sowie ggf. bei auftreten eines Störimpulses eine Austastung. In einem nachfolgenden Funktionsblock 16 erfolgt eine ZF-Filterung und anschließend eine AM-Demodulation und die Weitergabe eines NF-Signals 18 an eine nachgeschaltete, nicht dargestellte NF-Stufe des Rundfunkempfängers. Das digitale ZF-Signal oder Nutzsignal 13 wird ferner einem Funktionsblock 20 zugeführt, in dem eine Detektion eines Störimpulses erfolgt. Sofern ein Störimpuls detektiert wird, gibt der Funktionsblock 20 ein entsprechendes Signal 22 an den Funktionsblock 14, so dass in letzterem die Austastung aktiviert wird.

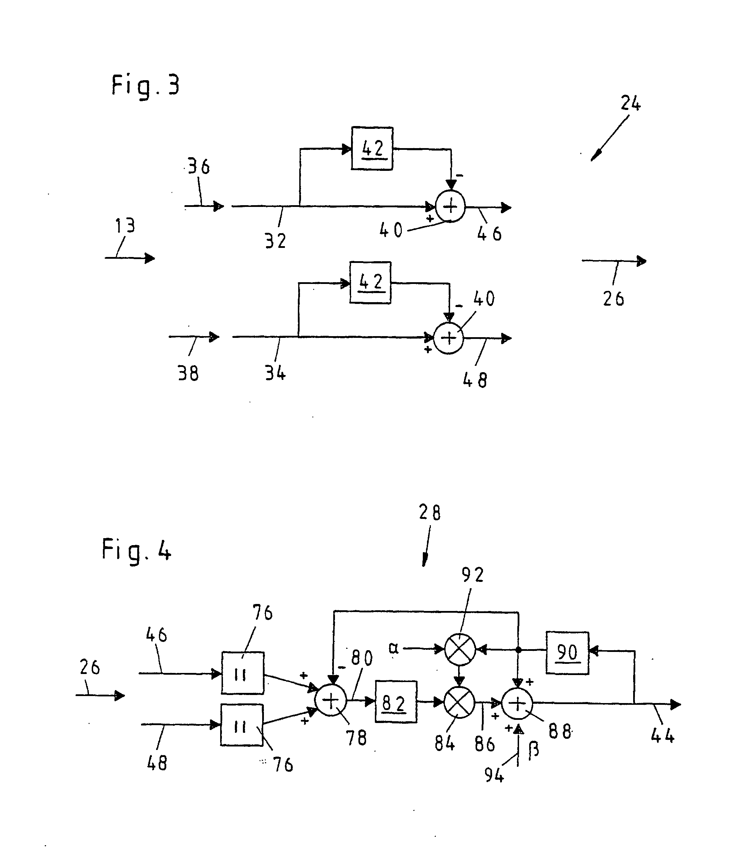

Fig. 2 zeigt detaillierter den Funktionsblock 20 zur Detektion eines Störimpulses. Hierbei wird das digitale ZF-Signal 13 einem Funktionsblock 24 zugeführt, welcher ein differenziertes digitales Nutzsignal 26 erzeugt, welches sowohl einem Funktionsblock 28 zum Berechnen eines Schwellwertes als auch einem Funktionsblock 30 zum Entscheiden ob ein Störimpuls vorliegt, zugeführt wird. Das in Fig. 3 dargestellte Ausführungsbeispiel eines Funktionsblockes 24 umfasst zwei Signalleitungen 32 und 34 für ein Inphase-ZF-Signal 36 und ein Quadratur-ZF-Signal 38. Die beiden Signale 36 und 38 werden jeweils einem Addierer 40 und einem Verzögerungsglied 42, welches das Signal bzw. den Abtastwert um eine Taktperiode verzögert, zugeführt. Das um eine Taktperiode verzögerte Signal des Verzögerungsgliedes 42 wird weiter invertiert dem Addierer 40 zugeführt, so dass auf beiden Leitungen 46 und 48 ein Differenzierer 24, 40, 42 realisiert ist. Diese Anordnung wirkt auf die Signale 36 und 38 wie ein Hochpassfilter auf ein analoges Signal, so dass Funktionsblock 24 auch als Hochpassfilter bezeichnet werden kann. Das differenzierte digitale Nutzsignal 26 ist somit im wesentlichen ein hochpassgefiltertes digitales Nutzsignal. Am Ausgang des Funktionsblockes 24 ist somit ein hochpassgefiltertes Inphase Signal 46 und ein hochpassgefiltertes Quadratur Signal 48 vorhanden.

Im Funktionsblock 20 (Fig. 2) wird das hochpassgefiltertes digitales Nutzsignal 26 mit einem aus dem Funktionsblock 28 kommenden Schwellwert 44 verglichen. Überschreitet das hochpassgefilterte digitale Nutzsignal 26 den Schwellwert 44, so wird vom Funktionsblock 30 ein Störimpuls detektiert und ein entsprechendes Austastsignal 22 an den Funktionsblock 14 (Fig. 1) gegeben.

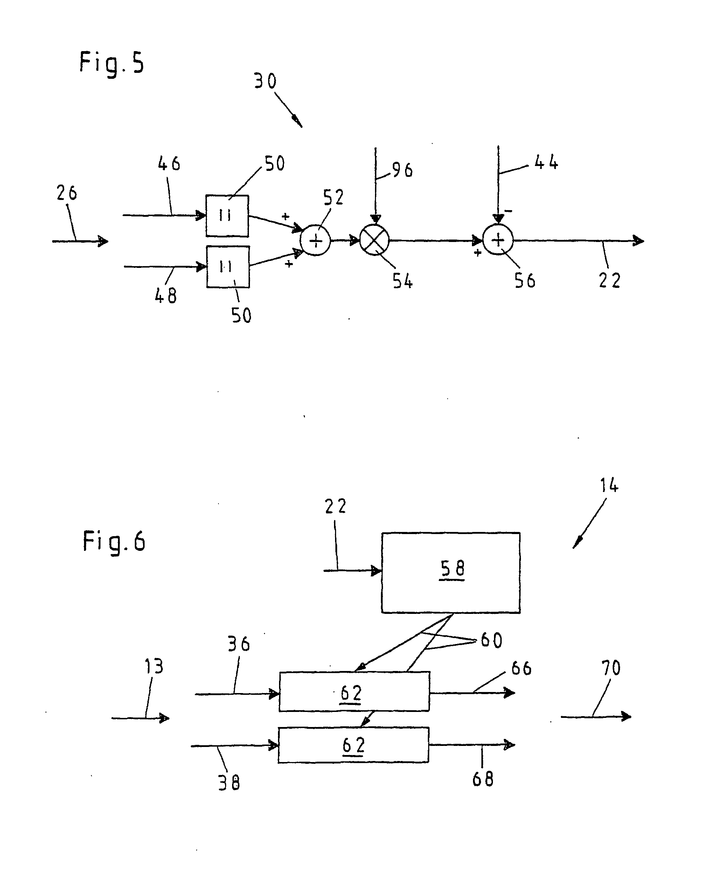

Bei der in Fig. 5 dargestellten Ausführungsform des Funktionsblockes 30 zum Entscheiden ob ein Störimpuls vorliegt oder nicht wird das differenziertes digitales Nutzsignal 26 bzw. dessen Quadraturanteil 48 und Inphaseanteil 46 bei 50 einer Betragsbildung unterzogen und in einem ersten Addierer 52 werden die gebildeten Beträge miteinander addiert. In einem nachfolgenden Multiplizierer 54 wird das so erhaltene Signal mit einem vorbestimmten Parameter χ multipliziert, wobei χ einen Skalierungsfaktor bildet und über Leitung 96 zugeführt. In einem weiteren Addierer 56 werden das skalierte Signal und der invertierte Schwellwert 44 zum Austastsignal 22 als Detektorausgangssignal zusammen addiert.

Wie sich aus der Darstellung einer beispielhaften Ausführungsform des Funktionsblockes 14 in Fig. 6 ergibt, wird das Detektorausgangssignal 22 einem Zählwerk 58 zugeführt. Ein Zählerausgang 60 wirkt auf jeweilige Dezimationsfilter 62 für das Inphase-ZF-Signal 36 und das Quadratur-ZF-Signal 38 des digitalen ZF-Signals 13 derart ein, dass in den Dezimationsfiltern enthaltene Zustandsspeicher ihren momentan gespeichert Wert beibehalten, wenn das Detektorausgangssignal 22 einen Störimpuls signalisiert. Mit anderen Worten werden in die Zustandsspeicher der Dezimationsfilter 62 trotz fortlaufenden Systemtaktes keine neuen Abtastwerte eingeschrieben, so dass ein zuletzt vor dem Störimpuls vorhandener Zustand der Dezimationsfilter beibehalten wird. Es wird also zum Austasten des Störimpulses dasjenige Signal bzw. diejenigen Abtastwerte gehalten und weitergegeben, welches bzw. welche unmittelbar vor auftreten des Störimpulses noch ungestört vorhanden war bzw. waren.

Es vorteilhaft nicht nur den zeitlich dem Störimpuls entsprechenden Abtastwert zu verwerfen und den vorherigen ungestörten Abtastwert aufrecht zu erhalten, sondern eine vorbestimmte Anzahl von dem Störimpuls nachfolgenden Abtastwerten ebenfalls zu verwerfen und nicht in die Zustandsspeicher der Dezimationsfilter 62 einzuschreiben. Hierzu dient das Zählwerk 58, welches in einer beispielhaften Ausführungsform in Fig. 7 dargestellt ist. Das Zählwerk 58 zählt nach auftreten eines Störimpulses, welches durch das Detektorausgangssignal 22 angezeigt wird, von einem vorbestimmten Wert δ, welcher über eine Leitung 98 zugeführt wird, abwärts bis auf null, so dass insgesamt δ+1 Abtastwerte ausgetastet bzw. verworfen werden. Hierzu wird der Wert δ bei negativem Detektorausgangssignal 22, was einen Störimpuls anzeigt, in ein Verzögerungsglied 64 eingespeichert. Gleichzeitig ist der Zählerausgang 60 gleich δ, also größer null, wodurch die von dem Zählerausgang angesteuerten Zustandsspeicher der Dezimationsfilter 62 (Fig. 6) ihre alten Wert beibehalten und neue Abtastwerte verworfen werden. Solange, bis das Zählwerk 58 von δ bis auf null herunter gezählt hat, bleibt dieser Zustand unverändert, so dass entsprechende Inphase- 66 und Quadratur-Anteile 68 des den Funktionsblock 14 verlassenden ZF-Signals 70 entsprechend korrigiert sind, d.h. Störimpulse sind ausgetastet.

Das Herunterzählen im Zählwerk 58 erfolgt, wie aus Fig. 7 anschaulich ersichtlich, durch Addieren von "-1" zu dem Inhalt des Verzögerungsgliedes 64 in einem Addierer 71 und einschreiben des neuen Wertes in das Verzögerungsglied 64. Nach dem Herunterzählen, d.h., sobald der Wert "-1" im Verzögerungsglied 64 eingeschrieben ist, ist der Zählerausgang 60 wieder negativ und die Zustandsspeicher der Dezimationsfilter arbeiten wieder wie gewohnt weiter, d.h. bei jedem Systemtakt wird ein neuer Abtastwert in die Zustandsspeicher eingeschrieben.

Fig. 8 zeigt ein bevorzugtes Ausführungsbeispiel für die Dezimationsfilter 62 gemäß Fig. 6 in Form eines FIR-Filters (Finite-lmpulse-Response-Filter), wobei in Fig. 8 beispielhaft das Dezimationsfilter 62 für das Inphase-Signal 36 dargestellt ist. Es ist ferner ein weiteres entsprechendes Dezimationsfilter für das Quadratur-Signal 38 des ZF-Signals 13 vorgesehen. Da in Fig. 6 beide Dezimationsfilter 62 einen gleichen Aufbau und eine gleiche Funktionsweise aufweisen gelten nachfolgende Erläuterungen sowohl für das Dezimationsfilter 62 für das Inphase-Signal 36 als auch für das identische, jedoch nicht dargestellte Dezimationsfilter 62 für das Quadratur-Signal 38, wobei lediglich als Eingangssignal statt des Inphase-Signals 36 das Quadratur-Signal 38 und als Ausgangssignal statt des Inphase-Signals 66 das Quadratur-Signal 68 zu setzten ist. Bei jedem Systemtakt wird ein Abtastwert des digitalen Nutzsignals 36 in die Zustandsspeicher 72 geschrieben bzw. von einem Zustandsspeicher 72 zum nächsten weiter gereicht. Je nach gewünschter Abtastratenreduktion sind N Zustandspeicher 72 vorgesehen. Weiterhin wird bei jedem Systemtakt der Inhalt der Zustandspeicher 72 mit einem jeweiligen Koeffizienten aₙ, mit n gleich 1, 2, ... N, in Multiplizierern 74 multipliziert, so dass sich schließlich das Inphase-Signal 66 des ZF-Signal 70 ergibt. Auf jeden Zustandsspeicher 72 wirkt der Zählerausgang 60 in der zuvor beschriebenen Weise. Die Zustandsspeicher 72 werden auch als "Delay-Line" bezeichnet.

Der optimale Parameter δ wird vorzugsweise empirisch bestimmt und festgelegt. Beispielsweise bei einem Systemtaktfrequenz von 200 kHz und entsprechender Dauer eines Systemtaktes von 5 µs ergibt sich bei δ = 8 bei Detektion eines Störimpulses eine Gesamtaustastzeit von 40 µs entsprechend neun Systemtakten, da der den Störimpuls tragende Abtastwert selbst sowie die weiteren acht nachfolgenden Abtastwerte verworfen werden, bis der Zählerausgang 60 wieder negativ ist (abwärts Zählen von acht bis null).

Ein bevorzugtes Ausführungsbeispiel für eine erfindungsgemäße Einrichtung 28 zur Schwellwertberechnung ist in Fig. 4 dargestellt. Diese umfasst eine Betragsbildungsvorrichtung 76, welche einen Betrag von Inphase- 46 und Quadraturanteil 48 des differenzierten digitalen Nutzsignals 26 bildet, einen ersten Addierer 78, welcher alle aus dem Nutzsignal 13 gebildeten Beträge sowie einen um eine Taktperiode verzögerten und invertierten Schwellwert zu einem ersten Zwischensignal 80 addiert, eine Vorzeichenberechnungsvorrichtung 82, welche ein Vorzeichen des ersten Zwischensignals 80 bestimmt, einen ersten Multiplizierer 84, welcher das Vorzeichen mit dem um eine Taktperiode verzögerten Schwellwert zu einem zweiten Zwischensignal 86 multipliziert, und einen zweiten Addierer 88, welcher das zweite Zwischensignal 86 mit dem um eine Taktperiode verzögerten Schwellwert zu einem neuen aktuellen Schwellwert 44 addiert, wobei ein Verzögerungsglied 90 den neuen aktuellen Schwellwert 44 abgreift und um eine Taktperiode verzögert dem ersten Addierer 78 invertiert, dem zweiten Addierer 88 und dem ersten Multiplizierer 84 zuführt.

Ferner ist zwischen dem Verzögerungsglied 90 und dem ersten Multiplizierer 84 ein zweiter Multiplizierer 92 vorgesehen, welcher den um eine Taktperiode verzögerten Schwellwert mit einem vorbestimmten Parameter α multipliziert. Der zweite Addierer 88 weist einen zusätzlichen Eingang 94 zum zusätzlichen hinzu addieren eines vorbestimmten Parameters β auf. Die Vorzeichenbestimmung in Block 82 entspricht im Wesentlichen einer Reduktion des Abtastwertes auf eine 1-Bit-Information, welche im nachfolgenden Integrator 90 über die Zeit aufintegriert wird. Wegen der Vorzeichenbildung 82 haben Störimpulse nur einen geringen Einfluss auf die Schwellwertberechnung.

Der Parameter α bestimmt eine Adaptionsgeschwindigkeit des durch das Verzögerungsglied 90 gebildeten Integrators. Der Parameter β legt optional einen minimalen Schwellwert fest. Durch die Vorzeichenbildung in Block 82 wird bei der Schwellwertberechnung eine Leistung von Störspitzen eliminiert, so dass das Ergebnis der Schwellwertberechnung nicht von den Störspitzen selbst beeinflusst ist. Stattdessen stellt sich nach einer bestimmten Zeit immer ein Schwellwert 44 ausschließlich in Abhängigkeit des tatsächlichen Nutzsignals ein. Dieser Schwellwert 44 ist dabei nicht notwendiger Weise ein ganzzahliges Vielfaches des Mittelwertes des Nutzsignals. Mit anderen Worten wird die Leistung der Störspitzen beschränkt, so dass diese das Ergebnis der Schwellwertberechnung nicht verfälschen. Andererseits wird erfindungsgemäß die Schwelle zum Erkennen von Störimpulsen nicht fest vorgegeben sondern mittels der Schaltung 28 adaptiv, je nach Empfangsbedingungen, berechnet. Dies erzielt eine besonders wirkungsvolle Störimpulsunterdrückung auch bei wechselnden Empfangsbedingungen, da sich der Schwellwert 44 an eine neue Situation entsprechend anpasst.

## Patentansprüche

1. Verfahren zum Erkennen und Entfernen von Störimpulsen in einem Nutzsignal, wobei
a) das Nutzsignal zu einem digitalen Nutzsignal digitalisiert wird,
**gekennzeichnet durch** folgende Schritte
b) Differentiation des digitalen Nutzsignals zu einem differenzierten digitalen Nutzsignal,
c) Berechnen eines Schwellwertes aus dem differenzierten digitalen Nutzsignal,
d) Vergleichen, ob das differenzierte digitale Nutzsignal den berechneten Schwellwert überschreitet und
e) Austasten des Störimpulses, wenn in Schritt (d) festgestellt wird, daß das differenzierte digitale Nutzsignal den berechneten Schwellwert überschreitet.

2. Verfahren nach Anspruch 1, **dadurch gekennzeichnet, daß** das Nutzsignal vor Schritt (a) bandbegrenzt ist.

3. Verfahren nach Anspruch 1 oder 2, **dadurch gekennzeichnet, daß** die Differentiation in Schritt (b) eine Hochpaßfilterung ist.

4. Verfahren nach Anspruch einem der vorhergehenden Ansprüche, **dadurch gekennzeichnet, daß** in Schritt (b) bei der Differentiation ein Inphaseanteil sowie ein Quadraturanteil des Nutzsignals getrennt voneinander differenziert werden.

5. Verfahren nach einem der vorhergehenden Ansprüche,
**dadurch gekennzeichnet, daß** das Nutzsignal ein ZF-Signal eins Rundfunkempfängers ist.

6. Verfahren nach Anspruch 5, **dadurch gekennzeichnet, daß** in Schritt (e) beim Austasten statt eines tatsächlichen ZF-Signalwertes ein letzter ungestörter ZF-Signalwert beibehalten oder kein Signal weitergegeben wird, wobei ein weiteres Einschreiben von Abtastwerten in eine Delay-Line unterbunden wird.

7. Verfahren nach einem der vorhergehenden Ansprüche,
**dadurch gekennzeichnet, daß** das Nutzsignal ein AM-moduliertes Signal ist.

8. Verfahren nach einem der vorhergehenden Ansprüche,
**dadurch gekennzeichnet, daß** in Schritt (c) ein Betrag eines Inphase-Anteils sowie eines Quadratur-Anteiles des Nutzsignals zusammen mit einem um eine Taktperiode verzögerten und invertierten Schwellwert addiert werden, aus dem Ergebnis das Vorzeichen bestimmt, dieses mit dem um eine Taktperiode verzögerten Schwellwert multipliziert und das Ergebnis mit dem um eine Taktperiode verzögerten Schwellwert addiert wird, wobei das letzte Ergebnis einen neuen aktuellen Schwellwert darstellt.

9. Verfahren nach Anspruch 8, **dadurch gekennzeichnet, daß** der um eine Taktperiode verzögerte Schwellwert vor der Multiplikation mit dem bestimmten Vorzeichen mit einem vorbestimmten Parameter α multipliziert wird.

10. Verfahren nach Anspruch 8 oder 9, **dadurch gekennzeichnet, daß** bei der letzten Addition zur Schwellwertberechnung zusätzlich ein vorbestimmter Parameter β hinzu addiert wird.

11. Verfahren nach einem der vorhergehenden Ansprüche,
**dadurch gekennzeichnet, daß** in Schritt (e) eine vorbestimmte Anzahl vom dem erkannten Storimpuls nachfolgenden Abtastwerten ausgetastet werden.

12. Verfahren nach einem der vorhergehenden Ansprüche,
**dadurch gekennzeichnet, daß** nach Schritt (e) eine FIR-Filterung (Finite-Impulse-Response-Filterung) durchgeführt wird.

13. Vorrichtung zum Erkennen und Entfernen von Störimpuisen in einem Nutzsignal,
mit einem Analog/Digital-Wandler (12) zur Umsetzung des Nutzsignals (10) in ein digitales Nutzsignal (13),
mit einer Einrichtung (14) zur Austastung des digitalen Nutzsignals (13) auf ein Austastsignal (22) hin,
und mit einer Einreichtung (20) zur Detektion eines Störimpulses und zur Erzeugung des Austastsignals (22) bei Erkennen eines Störimpulses, die eine Einrichtung (28) zur Berechnung eines Schwellwertes (44) und eine Einrichtung (30) zur Entscheidung über das Vorliegen eines Störimpulses umfaßt,
**dadurch gekennzeichnet,**
**daß** die Detektionseinrichtung (20) einen Differenzierer (24) zur Erzeugung eines differenzierten digitalen Nutzsignals (26) aus dem digitalen Nutzsignal (13) aufweist,
**daß** der Einrichtung (28) zur Schwellwertberechnung und der Entscheidungseinrichtung (30) das differenzierte digitale Nutzsignal (26) zugeführt ist,
und **daß** die Detektionseinrichtung (20) einen Störimpuls im Nutzsignal erkennt, wenn in den Entscheidungsmitteln (30) anhand eines Vergleichs des differenzierten digitalen Nutzsignals (26) mit dem Schwellwert (44) ein Überschreiten des Schwellwerts (44) durch das differenzierte digitale Nutzsignal (26) festgestellt wird.

14. Vorrichtung (100) nach Anspruch 13,
**dadurch gekennzeichnet, daß**
die Einrichtung (28) zur Schwellwertberechnung in Signalverarbeitungsrichtung folgendes umfaßt:
- wenigstens eine Betragsbildungsvorrichtung (76), welche einen Betrag von wenigstens einem Anteil (46, 48) des differenzierten digitalen Nutzsignals (26) bildet
- einen ersten Addierer (78), welcher alle aus dem differenzierten digitalen Nutzsignal (26) gebildeten Beträge sowie einen um eine Taktperiode verzögerten und invertierten Schwellwert zu einem ersten Zwischensignal (80) addiert
- eine Vorzeichenberechnungsvorrichtung (82), welche ein Vorzeichen des ersten Zwischensignals (80) bestimmt
- einen ersten Multiplizierer (84), welcher das Vorzeichen mit dem um eine Taktperiode verzögerten Schwellwert zu einem zweiten Zwischensignal (86) multipliziert,
- und einen zweiten Addierer (88), welcher das zweite Zwischensignal (86) mit dem um eine Taktperiode verzögerten Schwellwert zu einem neuen aktuellen Schwellwert (44) addiert, wobei ein Verzögerungsglied (90) den neuen aktuellen Schwellwert (44) abgreift und um eine Taktperiode verzögert dem ersten Addierer (78) invertiert, dem zweiten Addierer (88) und dem ersten Multiplizierer (84) zuführt.

15. Vorrichtung (100) nach Anspruch 14, **dadurch gekennzeichnet, daß** zwischen dem Verzögerungsglied (90) und dem ersten Multiplizierer (84) ein zweiter Multiplizierer (92) vorgesehen ist, welcher den um eine Taktperiode verzögerten Schwellwert mit einem vorbestimmten Parameter α multipliziert.

16. Vorrichtung (100) nach Anspruch 14 oder 15, **dadurch gekennzeichnet, daß** der zweite Addierer (88) einen zusätzlichen Eingang (94) zum zusätzlichen hinzu addieren eines vorbestimmten Parameters β aufweist.

17. Vorrichtung (100) nach einem der Ansprüche 13 bis 16, **dadurch gekennzeichnet, daß** die Einrichtung (14) zur Austastung wenigstens ein FIR-Filter (Finite-Impulse-Response-Filter) (62) mit einer vorbestimmten Anzahl N von Zustandsspeichern (72) zur Abtastratenreduktion umfaßt.

18. Vorrichtung (100) nach Anspruch 17, **dadurch gekennzeichnet, daß** die Einrichtung (14) zur Abtastratenreduktion und Austastung einen Zähler (58) umfaßt, dessen Ausgang (60) die Zustandsspeicher (72) des FIR-Filters (62) derart ansteuert, daß bei erkanntem Störimpuls zum Austasten desselben für eine vorbestimmte Anzahl δ von Abtastwerten die Zustandsspeicher ihre letzten Werte vor Auftreten des Störimpulses beibehalten oder ihren Speicher auf Null setzen.

19. Verwendung der Vorrichtung (100) nach einem der Ansprüche 13 bis 18 in einem Rundfunkempfänger, wobei diese vor einer ZF-Stufe angeordnet ist.

## Claims

1. Method of identifying and removing interference pulses in a useful signal, with
a) the useful signal being digitized to form a digital useful signal,
**characterized by** the following steps:
b) differentiation of the digital useful signal to form a differentiated digital useful signal,
c) calculation of a threshold value from the differentiated digital useful signal,
d) comparison of whether the differentiated digital useful signal is greater than the calculated threshold value, and
e) masking out the interference pulse if it is found in step (d) that the differentiated digital useful signal is greater than the calculated threshold value.

2. Method according to Claim 1, **characterized in that** the useful signal is band-limited before step (a).

3. Method according to Claim 1 or 2, **characterized in that** the differentiation in step (b) is a high-pass filtering process.

4. Method according to one of the preceding claims,
**characterized in that**, during the differentiation in step (b), an in-phase component as well as a quadrature component of the useful signal are differentiated separately from one another.

5. Method according to one of the preceding claims,
**characterized in that** the useful signal is an IF signal of a broadcast radio receiver.

6. Method according to Claim 5, **characterized in that**, during the masking process in step (e), instead of an actual IF signal value, a most recently undisturbed IF signal value is retained or no signal is passed on, with further writing of sample values to a delay line being suppressed.

7. Method according to one of the preceding claims,
**characterized in that** the useful signal is an AM-modulated signal.

8. Method according to one of the preceding claims,
**characterized in that**, in step (c), a magnitude of an in-phase component and of a quadrature component of the useful signal are added together with a threshold value which is delayed by one clock cycle and is inverted, the mathematical sign is determined from the result, is multiplied by the threshold value that has been delayed by one clock cycle and the result is added to the threshold value which has been delayed by one clock cycle, with the final result representing a new current threshold value.

9. Method according to Claim 8, **characterized in that** the threshold value which has been delayed by one clock cycle is multiplied by a predetermined parameter α, before the multiplication by the specific mathematical sign.

10. Method according to Claim 8 or 9, **characterized in that** a predetermined parameter β is additionally added in during the final addition for the threshold value calculation.

11. Method according to one of the preceding claims,
**characterized in that**, in step (e), a predetermined number of sample values which follow the identified interference pulse are masked out.

12. Method according to one of the preceding claims,
**characterized in that**, after step (e), an FIR filtering (finite impulse response filtering) process is carried out.

13. Apparatus for identifying and removing interference pulses in a useful signal,
having an analogue/digital converter (12) for converting the useful signal (10) to a digital useful signal (13),
having a device (14) for masking out the digital useful signal (13) in response to a masking signal (22), and having a device (20) for detection of an interference pulse and for producing the masking signal (22) when an interference pulse is identified, which comprises a device (28) for calculating a threshold value (44) and a device (30) for deciding whether an interference pulse is present,
**characterized**
**in that** the detection device (20) has a differentiator (24) for producing a differentiated digital useful signal (26) from the digital useful signal (13),
**in that** the differentiated digital useful signal (26) is supplied to the device (28) for threshold value calculation and to the decision device (30),
and **in that** the detection device (20) identifies an interference pulse in the useful signal when it is found in the decision means (30), on the basis of a comparison of the differentiated digital useful signal (26) with the threshold value (44), that the differentiated digital useful signal (26) has exceeded the threshold value (44).

14. Apparatus (100) according to Claim 13,
**characterized in that**
the device (28) for threshold value calculation comprises the following items in the signal processing direction:
- at least one magnitude-forming apparatus (76) which forms a magnitude of at least one component (46, 48) of the differentiated digital useful signal (26),
- a first adder (78) which adds all the magnitudes formed from the differentiated digital useful signal (26) as well as a threshold value, which has been delayed by one clock cycle and has been inverted, to form a first intermediate signal (80),
- a mathematical sign calculation apparatus (82) which determines a mathematical sign of the first intermediate signal (80),
- a first multiplier (84), which multiplies the mathematical sign by the threshold value which has been delayed by one clock cycle, in order to form a second intermediate signal (86),
- and a second adder (88), which adds the second intermediate signal (86) to the threshold value, which has been delayed by one clock cycle, to form a new current threshold value (44), with a delay element (90) tapping off the new current threshold value (44) and passing it, delayed by one clock cycle, to the first multiplier (84), to the second adder (88) and, in inverted form, to the first adder (78).

15. Apparatus (100) according to Claim 14,
**characterized in that** a second multiplier (92) is provided between the delay element (90) and the first multiplier (84), and multiplies the threshold value, which has been delayed by one clock cycle, by a predetermined parameter α.

16. Apparatus (100) according to Claim 14 or 15,
**characterized in that** the second adder (88) has an additional input (94) for addition of a predetermined parameter β in addition to this.

17. Apparatus (100) according to one of Claims 13 to 16, **characterized in that** the device (14) for masking comprises at least one FIR filter (finite impulse response filter) (62) with a predetermined number N of state memories (72) for sampling rate reduction.

18. Apparatus (100) according to Claim 17,
**characterized in that** the device (14) for sampling rate reduction and masking comprises a counter (58), whose output (60) drives the state memories (72) of the FIR filter (62) such that, when an interference pulse is identified, the state memories retain their most recent values before the occurrence of the interference pulse, or their memories are set to zero, in order to mask out such an interference pulse for a predetermined number δ of sample values.

19. Use of the apparatus (100) according to one of Claims 13 to 18 in a broadcast radio receiver, with this apparatus (100) being arranged upstream of an IF stage.

## Revendications

1. Procédé pour reconnaître et éliminer des impulsions parasites dans un signal utile, selon lequel :
a) le signal utile est mémorisé pour former un signal utile numérique,
**caractérisée par** les étapes suivantes :
b) différenciation de signal numérique pour donner un signal utile numérique différencié ;
c) calcul d'une valeur de seuil à partir du signal utile numérique différencié ;
d) comparaison avec une valeur de seuil calculée, pour déterminer si cette valeur est dépassée ;
e) effacement de l'impulsion parasite si à l'étape (d) il est établi que le signal utile numérique différencié dépasse la valeur de seuil calculée.

2. Procédé selon la revendication 1,
**caractérisé en ce que**
le signal utile est limité en bande avant l'étape (a).

3. Procédé selon l'une des revendications 1 ou 2,
**caractérisé en ce que**
la différenciation à l'étape (b) est un filtrage passe-haut.

4. Procédé selon l'une des revendications précédentes,
**caractérisé en ce que**
à l'étape (b), la différenciation sépare l'une de l'autre la fraction du signe et la fraction en quadrature du signal utile.

5. Procédé selon l'une des revendications précédentes,
**caractérisé en ce que**
le signal utile est un signal à fréquence intermédiaire ZF d'un récepteur radio.

6. Procédé selon la revendication 5,
**caractérisé en ce que**
à l'étape (e) lors de l'effacement, on maintient à la place d'une valeur réelle de signal ZF une dernière valeur non parasitée de signal ZF ou on ne transmet aucun signal, de sorte qu'il n'y a aucun autre enregistrement de valeurs d'échantillonnage dans une ligne de retardement.

7. Procédé selon l'une des revendications précédentes,
**caractérisé en ce que**
le signal utile est un signal modulé en amplitude.

8. Procédé selon l'une des revendications précédentes,
**caractérisé en ce que**
à l'étape c) des valeurs de la fraction en ligne et de la fraction en quadrature du signal utile sont ajoutées toutes deux à une valeur de seuil retardée d'une période de rythme et inversée, ce résultat détermine un signe qui est affecté à la valeur de seuil retardée d'une période de rythme et à ce résultat est ajoutée cette valeur de seuil retardée pour donner un résultat final qui représente une nouvelle valeur actuelle de seuil.

9. Procédé selon la revendication 8,
**caractérisé en ce que**
la valeur de seuil retardée d'une période de rythme, avant de recevoir le signe déterminé, est multiplié par un paramètre prédéterminé α.

10. Procédé selon l'une des revendications 8 ou 9,
**caractérisé en ce que**
lors de la dernière addition aboutissant à la nouvelle valeur de seuil, un paramètre prédéterminé β est ajouté en plus.

11. Procédé selon l'une des revendications précédentes,
**caractérisé en ce que**
à l'étape (e), un nombre prédéfini de valeurs d'échantillonnage faisant suite à l'impulsion parasite sont effacées.

12. Procédé selon l'une des revendications précédentes,
**caractérisé en ce que**
après l'étape (e) un filtrage FIR (Finite Impulse Response Filtering) est effectué.

13. Dispositif pour reconnaître et éliminer des impulsions parasites dans un signal utile,
dans lequel :
- un convertisseur analogiqe/numérique (12) transforme le signal utile (10) en un signal numérique utile (13) ;
- un dispositif (14) d'effacement de signal numérique utile (13) est commandé par un signal d'effacement (22) ;
- un dispositif (20) sert à détecter une impulsion parasite et à produire un signal d'effacement (22) quand une impulsion parasite est détectée, ce dispositif comprenant un dispositif (28) de calcul d'une valeur de seuil (44) et un dispositif (30) pour décider de la présence d'une impulsion parasite,
**caractérisé en ce que**
le dispositif de détection (20) présente un différenciateur (24) pour générer, à partir du signal numérique utile (13), un signal numérique utile différencié (26) ;
ce signal différencié (26) est envoyé au dispositif (28) de calcul de seuil et au dispositif de décision (30) ;
le dispositif de détection (20) reconnaît la présence d'une impulsion parasite dans le signal quand, dans le dispositif de décision (30), une comparaison du signal numérique utile différencié (26) et d'une valeur de seuil (44), établit que celle-ci est dépassée par le signal utile (26).

14. Dispositif (100) selon la revendication 13,
**caractérisé en ce que**
le dispositif (28) de calcul de la valeur de seuil prévu dans le dispositif de traitement du signal comprend :
- au moins un dispositif de formation de valeur (76) qui établit la valeur d'au moins une fraction (46, 48) du signal utile numérique différencié (26) ;
- un premier additionneur (78) qui additionne toutes les valeurs établies à partir du signal utile numérique différencié (26) et une valeur de seuil retardée d'une période de rythme et inversée, pour donner un premier signal intermédiaire (80),
- un dispositif de calcul de signe (82) qui définit le signe au premier signal intermédiaire (80) ;
- un premier multiplicateur (84) qui affecte le signal à une valeur de seuil retardée d'une période de rythme pour donner un second signal intermédiaire (86) ;
- un second additionneur (88) qui additionne le second signal intermédiaire (86) à la valeur de seuil retardée d'une période de rythme pour donner une nouvelle valeur actuelle de seuil (44) prise pour le compte par un organe de retardement (90) qui la retarde d'une période de cadence et l'envoie au premier additionneur (78) avec inversion, au second additionneur (88) et au premier multiplicateur (84).

15. Dispositif (100) selon la revendication 14,
**caractérisé en ce que**
entre l'organe de retardement (90) et le premier multiplicateur (84) est prévu un second multiplicateur (92) qui multiplie la valeur de seuil retardée d'une période de rythme, par un paramètre prédéfini α.

16. Dispositif (100) selon les revendications 14 ou 15,
**caractérisé en ce que**
le second additionneur (88) présente une entrée supplémentaire (94) pour effectuer l'addition supplémentaire d'un paramètre prédéfini β.

17. Dispositif (100) selon l'une des revendications 13 à 16,
**caractérisé en ce que**
le dispositif (14) comprend pour l'effacement au moins un filtre FIR (Finite-Impulse-Response-Filter) (62) avec un nombre prédéfini N de mémoires d'état (72) pour réduire le taux d'échantillonnage.

18. Dispositif (100) selon la revendication 17,
**caractérisé en ce que**
le dispositif (14) de réduction de taux d'échantillonnage et d'effacement comprend un compteur (58) dont la sortie (60) commande les mémoires d'état (72) du filtre FIR (62), de manière qu'afin d'effacer une impulsion parasite reconnue, les mémoires d'état, pour un nombre prédéfini δ de valeurs d'échantillonnage conservent ces valeurs telles qu'elles étaient juste avant l'apparition de l'impulsion parasite, ou se mettent à zéro.

19. Utilisation du dispositif (100) selon l'une des revendications 13 à 18, dans une réception radio, le dispositif étant monté en amont d'un étage ZF.
